# EUROPEAN PATENT APPLICATION

(11) **EP 4 733 878 A1**
(43) Date of publication of application: **29.04.2026**
(21) Application number: 23942673.7
(22) Date of filing: 25.06.2023
(51) Int. Cl.: G05D 1/60, G05D 109/20

(54) **AIRCRAFT CONTROL METHODS AND APPARATUSES, AND AIRCRAFT AND STORAGE MEDIUM**

(71) Applicant: SZ Shanzhi Technology Co., Ltd., Shenzhen, Guangdong 518000 (CN)
(72) Inventor: KUANG, Yifan, Shenzhen, Guangdong 518000 (CN); XU, Haonan, Shenzhen, Guangdong 518000 (CN); LAI, Zhenzhou, Shenzhen, Guangdong 518000 (CN); LV, Zichen, Shenzhen, Guangdong 518000 (CN)
(74) Representative: Appelt, Christian W.
(86) International application number: PCT/CN2023/102188
(87) International publication number: WO 2025/000140

(57) **Abstract**

A control method, device, aircraft, and storage medium for an aircraft are provided. The method comprises: determining position information of the aircraft and position information of a load on a bearing surface; determining whether a horizontal position of the aircraft satisfies a first preset condition based on the position information of the aircraft and the position information of the load; in response to the horizontal position of the aircraft not satisfying the first preset condition, prohibiting the aircraft from pulling the load away from the bearing surface. In this way, the probability of the cable entangling the rotor blade during the process of the aircraft pulling the load away from the bearing surface, and the probability of the load pulling the aircraft and causing it to tip over, can be reduced, thereby ensuring the safety of the aircraft during takeoff.

## Description

### Technical Field

The embodiments of the present application relate to the field of aircraft technology, and more specifically, to an aircraft control method, an aircraft control device, an aircraft, and a storage medium.

### Background Art

With the development of aircraft-related technologies, aircraft have been gradually applied in the transportation field. For example, the load to be transported can be mounted on the aircraft via a cable, and then the aircraft can transport the load to its destination. In related technologies, when it is detected that the user has mounted the load onto the aircraft, the aircraft is usually controlled to take off directly, pulling the load off the ground. At this point, the aircraft may encounter situations such as tipping over due to pulling or the cable entangling the propeller blades, leading to takeoff failure, damage to the drone, or even harm to surrounding operators. Therefore, there is a need to provide a safer takeoff solution.

### Summary of the Invention

In view of the foregoing, the present application provides a control method, apparatus, aircraft, and storage medium for an aircraft.

According to a first aspect of the present application, a control method for an aircraft is provided, the method comprising:
determining position information of the aircraft and position information of a load, where the load is located on a bearing surface;
based on the position information of the aircraft and the position information of the load, determining whether a horizontal position of the aircraft satisfies a first preset condition; and
in response to the horizontal position of the aircraft not satisfying the first preset condition, prohibiting the aircraft from pulling the load away from the bearing surface.

According to a second aspect of the present application, a control method for an aircraft is provided, the method comprising:
during a landing process of the aircraft, in response to that a load mounted on the aircraft has landed on a bearing surface, controlling the aircraft to release the load;
after releasing the load, controlling the aircraft to hover, and during a hovering process of the aircraft, determining whether a user instruction is received within a preset duration, and in response to receiving the user instruction, performing a corresponding task based on the user instruction received.

According to a third aspect of the present application, a control method for an aircraft is provided, the method comprising:
during a landing process of the aircraft, in response to determining that a load mounted on the aircraft has landed on the bearing surface, determining whether a volume of the load is less than a space formed by an aircraft landing gear; and
determining, based on a determination result, a landing position of the aircraft.

According to a fourth aspect of the present application, a control method for an aircraft is provided, the method comprising:
during a flight of the aircraft, obtaining state information of a load mounted on the aircraft in real time, the state information being related to a movement of the load relative to the aircraft; and
controlling the aircraft to move based on the state information of the load, so that the state information of the load meets a preset condition.

According to a fifth aspect of the present application, a control device for an aircraft is provided, the device comprises a processor, a memory, and a computer program stored in the memory and executable by the processor, where when executing the computer program, the processor is configured to implement the following steps:
determining position information of the aircraft and position information of a load, where the load is located on a bearing surface;
based on the position information of the aircraft and the position information of the load, determining whether a horizontal position of the aircraft satisfies a first preset condition; and
in response to the horizontal position of the aircraft not satisfying the first preset condition, prohibiting the aircraft from pulling the load away from the bearing surface.

According to a sixth aspect of the present application, a control device for an aircraft is provided, the device comprises a processor, a memory, and a computer program stored in the memory and executable by the processor, where when executing the computer program, the processor is configured to implement the following steps:
during a landing process of the aircraft, in response to that a load mounted on the aircraft has landed on a bearing surface, controlling the aircraft to release the load;
after releasing the load, controlling the aircraft to hover, and during a hovering process of the aircraft, determining whether a user instruction is received within a preset duration, and in response to receiving the user instruction, performing a corresponding task based on the user instruction received.

According to a seventh aspect of the present application, a control device for an aircraft is provided, the device comprises a processor, a memory, and a computer program stored in the memory and executable by the processor, where when executing the computer program, the processor is configured to implement the following steps:
during a landing process of the aircraft, in response to determining that a load mounted on the aircraft has landed on the bearing surface, determining whether a volume of the load is less than a space formed by an aircraft landing gear; and
determining, based on a determination result, a landing position of the aircraft.

According to an eighth aspect of the present application, a control device for an aircraft is provided, the device comprises a processor, a memory, and a computer program stored in the memory and executable by the processor, where when executing the computer program, the processor is configured to implement the following steps:
during a flight of the aircraft, obtaining state information of a load mounted on the aircraft in real time, the state information being related to a movement of the load relative to the aircraft; and
controlling the aircraft to move based on the state information of the load, so that the state information of the load meets a preset condition.

According to a ninth aspect of the present application, an aircraft is provided, the aircraft comprises a processor, a memory, and a computer program stored in the memory and executable by the processor, where when executing the computer program, the processor is configured to implement the method according to the first, second, third and/or fourth aspect.

According to a tenth aspect of the present application, a computer-readable storage medium is provided, a computer program is stored on the computer-readable storage medium, which, when executed, implements the method according to the first aspect.

By applying the solution provided in this application, before the aircraft takes off, the relative position of the aircraft and the load in the horizontal direction can be pre-assessed. If it is found that the aircraft's horizontal position deviates too far from directly above the load, the aircraft is prohibited from pulling the load off the bearing surface. In this way, the probability of the cable entangling the propeller blades and the aircraft tipping over due to the load's pull during the process of lifting the load off the bearing surface can be reduced, ensuring the safety of the aircraft during takeoff.

It should be understood that the above general description and the detailed description below are only exemplary and explanatory, and do not limit the present application.

### Brief Description of the Drawings

To more clearly illustrate the technical solutions in the embodiments of the present application, the drawings required for the description of the embodiments are briefly introduced below. Obviously, the drawings described below are merely some embodiments of the present application. For a person of ordinary skill in the art, other drawings can be obtained based on these drawings without exerting creative effort.
FIG. 1 is a schematic diagram of an aircraft propeller entangled by a cable according to some embodiments of the present application.
FIG. 2 is a flowchart of an aircraft control method according to some embodiments of the present application.
FIG. 3 is a schematic diagram of an aircraft meeting a second preset condition for height according to some embodiments of the present application.
FIG. 4 is a schematic diagram of determining the load position based on images collected by a visual sensor according to some embodiments of the present application.
FIG. 5 is a schematic diagram of determining the load position based on cable length and swing angle according to some embodiments of the present application.
FIG. 6 is a schematic diagram of swing suppression according to some embodiments of the present application.
FIG. 7 is a schematic diagram of swing suppression according to some embodiments of the present application.
FIG. 8 is a schematic diagram of swing suppression according to some embodiments of the present application.
FIG. 9 is a schematic diagram of swing suppression according to some embodiments of the present application.
FIG. 10 is a schematic diagram of displaying the load status to the user through a control device according to some embodiments of the present application.
FIG. 11 is a schematic diagram of stowing the load in the landing gear space after the aircraft lands according to some embodiments of the present application.
FIG. 12 is a schematic diagram of the logical structure of an aircraft control apparatus according to some embodiments of the present application.

### Brief Description

The technical solution(s) in the embodiments of the present application will be clearly and completely described below in conjunction with the drawings in the embodiments of the present application. Obviously, the described embodiments are only a part of the embodiments of the present application, not all of them. Based on the embodiments in the present application, all other embodiments obtained by a person of ordinary skill in the art without making creative efforts fall within the scope of protection of the present application.

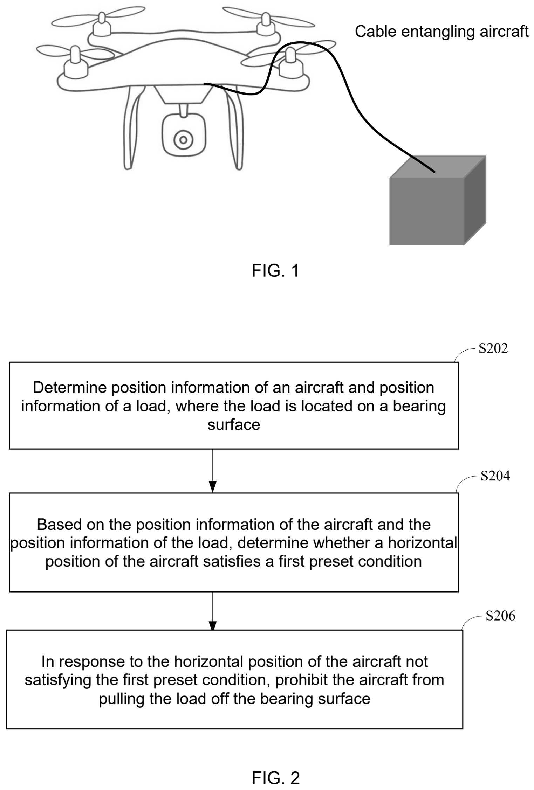

With the development of aircraft-related technologies, aircraft have been gradually applied in the transportation field. For example, the load to be transported can be mounted on the aircraft via a cable, and then the aircraft can transport the load to its destination. In related technologies, when it is detected that the user has mounted the load onto the aircraft, the aircraft is usually controlled to take off directly, pulling the load off the ground. At this time, if the load is placed around the aircraft, as shown in FIG. 1, the cable connecting the aircraft and the load can easily be blown up by the propeller wash generated by the rotating blades and entangle the blades, leading to takeoff failure, damage to the aircraft, or even harm to surrounding operators. Additionally, during the process of pulling the load off the ground, the aircraft may also tilt due to the load pulling on it, resulting in the problem of the aircraft tipping over.

Based on this, the embodiments of the present application provide a control method for an aircraft, which can pre-assess the relative position of the aircraft and the load in the horizontal direction before the aircraft takes off. If it is found that the aircraft's horizontal position deviates too far from directly above the load, the aircraft is prohibited from pulling the load off the bearing surface. In this way, the probability of the cable entangling the propeller blades and the aircraft tipping over due to the load's pull during the process of lifting the load off the bearing surface can be reduced, ensuring the safety of the aircraft during takeoff.

The aircraft control method of the embodiments of the present application can be executed by the aircraft or by the control terminal of the aircraft, which can be communicatively connected to the aircraft. Alternatively, some steps of the control method can be executed by the aircraft, and some steps can be executed by the control terminal, with specific configurations flexibly set based on actual needs.

The aircraft in the embodiments of the present application may include various types of manned aircraft or unmanned aerial vehicles, such as logistics drones.

As shown in FIG. 2, the aircraft control method may include the following steps:
S202: Determine position information of an aircraft and position information of a load, where the load is located on a bearing surface.

In step S202, the position information of the aircraft and the position information of the load can be determined, where the load may be located on a bearing surface, which can be the ground or another surface used for placing the load. The position information of the aircraft and the load can be determined based on perception sensors (e.g., LiDAR, visual sensors) mounted on the aircraft.

S204: Based on the position information of the aircraft and the position information of the load, determine whether a horizontal position of the aircraft satisfies a first preset condition.

In step S204, after determining the position information of the aircraft and the load, it can be judged whether the horizontal position of the aircraft satisfies the first preset condition based on their position information. When the load is directly above or approximately directly above the aircraft, the cable connecting the load and the aircraft is also approximately below the aircraft, meaning that during the process of the aircraft moving upward to pull the load off the bearing surface, the probability of the propeller blades being entangled by the cable is low. However, if the load is positioned beside the aircraft, the cable is also beside the aircraft. In this case, as the propeller blades rotate, it is easy for the cable to be blown up and entangle the blades, and it is also likely that the load will pull on the aircraft, causing it to tip over. Therefore, before controlling the aircraft to pull the load off the bearing surface, a preliminary judgment can be made as to whether the horizontal position of the aircraft satisfies the first preset condition.

The first preset condition may be that the aircraft is within a preset distance range directly above the load, and this preset distance range can be set based on actual conditions, as long as it ensures that during takeoff, the cable does not entangle the propeller blades and the load does not pull the aircraft, causing it to tip over.

S206: In response to the horizontal position of the aircraft not satisfying the first preset condition, prohibit the aircraft from pulling the load off the bearing surface.

In step S206, if it is determined based on the position information of both that the horizontal position of the aircraft relative to the load does not satisfy the first preset condition, the aircraft is prohibited from pulling the load off the bearing surface. For example, if the aircraft deviates significantly from the position directly above the load, the cable between the aircraft and the load may easily be blown up and entangle the propeller blades. In this case, the aircraft is prohibited from pulling the load off the bearing surface.

By pre-assessing the relative horizontal position of the aircraft and the load based on their position information before pulling the load off the bearing surface, and prohibiting the aircraft from pulling the load off the bearing surface if the preset condition is not met, it is possible to prevent the propeller blades from blowing up the cable during the process of lifting the load off the bearing surface, which could lead to the cable entangling the blades, thereby ensuring the safety of the aircraft during the takeoff process.

In some embodiments, the first preset condition may be that the aircraft is located directly above the load, where it should be noted that the aircraft being directly above the load refers to the aircraft being approximately directly above the load, for example, it may be exactly above the load or at a position deviating from directly above by a certain distance.

In some embodiments, if it is determined based on the position information of the aircraft and the load that the horizontal position of the aircraft relative to the load satisfies the first preset condition, the aircraft is controlled to move upward to pull the load off the bearing surface.

In some embodiments, during the process of prohibiting the aircraft from pulling the load off the bearing surface, the aircraft can be controlled to adjust its horizontal position to satisfy the first preset condition. For example, the position of the load can be determined based on the perception sensors on the aircraft, and then the aircraft can be controlled to move to a position directly above the load.

In some embodiments, while the aircraft is adjusting its horizontal position to satisfy the first preset condition, the aircraft can further be controlled to move so that its height relative to the bearing surface satisfies a second preset condition. Before the aircraft pulls the load off the bearing surface, in addition to ensuring that the aircraft's horizontal position is as close as possible to directly above the load, there are also certain requirements for the aircraft's height. For example, the aircraft's height should preferably be higher than the load's height and must not exceed the length of the cable.

In some embodiments, the cable of the aircraft may be a fixed-length cable, meaning the cable length is not adjustable. In some embodiments, the aircraft may also be equipped with a winch system, which can extend or retract the cable used to mount the load, for example, by pulling out or retracting the cable to adjust its length based on the needs of different scenarios.

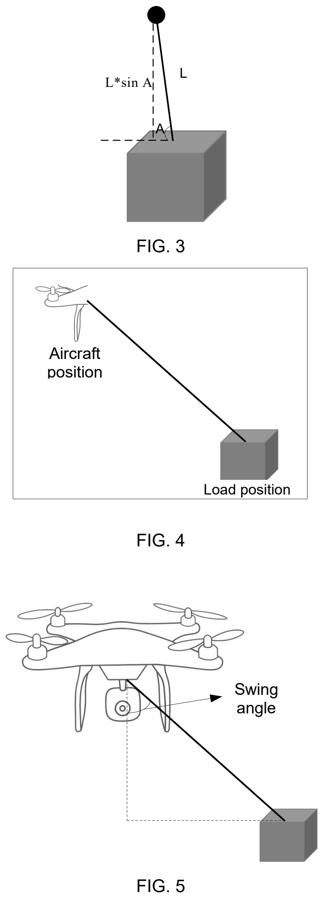

In some embodiments, as shown in FIG. 3, the length of a pull-out cable of the aircraft is L, where L may be the total length of the cable initially pulled out by the winch system plus any subsequently pulled-out cable. The angle of the cable relative to the horizontal plane is A, where this angle is less than or equal to 90°. During the process of the aircraft adjusting its horizontal position, the height of the aircraft relative to the bearing surface is H, and the second preset condition may be that H is less than or equal to L*sin A.

Considering that during the process of an aircraft pulling a load away from the bearing surface, if the aircraft's upward movement speed or upward movement acceleration is too large, it can easily cause a sudden increase in the cable's tension, leading to the aircraft's power output exceeding the maximum power output the aircraft can withstand. In such cases, it is easy for the aircraft to tilt, resulting in the aircraft rolling over and crashing. Therefore, in some embodiments, during the process of controlling the aircraft to move upward to pull the load away from the bearing surface, the aircraft can be controlled to be in a speed-limited mode. When the aircraft is in the speed-limited mode, motion parameters such as the aircraft's motion acceleration and motion speed are subject to certain restrictions, meaning that the motion parameters at this time are smaller than those during normal flight, ensuring that the aircraft's motion parameters are not excessively large. Then, the aircraft can be controlled to move upward in the speed-limited mode to pull the load away from the bearing surface. When it is detected that the load has been pulled away from the bearing surface, the aircraft is controlled to exit the speed-limited mode, allowing the aircraft to fly according to the motion parameters of normal flight.

In some embodiments, when it is detected that the load has been pulled away from the bearing surface and that the aircraft or load is in a trapped state, the aircraft can be controlled to maintain the speed-limited mode. During the flight of the aircraft, issues such as the load or the aircraft becoming trapped may occur. For example, the aircraft or load may get caught on tree branches, utility poles, or other objects, or when passing through a narrow passage, the load may be too large to pass through. In such cases, to avoid the aircraft rolling over due to excessive power output, the aircraft can be controlled to remain in the speed-limited mode.

In some embodiments, when it is detected that the duration for which the cable tension of the mounted load exceeds a preset tension threshold is longer than a preset duration, it is determined that the aircraft or load is in a trapped state. When the aircraft or load is trapped, the cable tension continues to increase as the aircraft moves forward. Therefore, if it is detected that the duration for which the cable tension exceeds the preset tension threshold is longer than the preset duration, it can be determined that the aircraft or load is in a trapped state.

In some embodiments, images captured by the visual sensor on the aircraft can be obtained, and the scenes in the images can be identified to determine whether the aircraft or load is in a trapped state based on the images. For example, a model can be pre-trained to recognize whether the images include scenes where the aircraft or load is trapped, such as being caught on tree branches or unable to pass through a narrow passage.

In some embodiments, if it is determined that the aircraft or load is in a trapped state, prompt information indicating that the aircraft or load is trapped can be sent to the aircraft's control device, so that the control device can display it to the user. Of course, in some scenarios, the prompt information may also include images of the load captured by the visual sensor on the aircraft, which are sent to the user to help them understand the specific situation of the load.

In some embodiments, after sending prompt information to the user, if an instruction to release the load triggered by the user is received, the aircraft can be controlled to release the load. Considering that in some scenarios, if the load is trapped and cannot be freed, continuing to move the aircraft may cause it to roll over and crash. If the aircraft remains in a hovering state, it may also crash due to insufficient battery power. In such cases, to ensure the safety of the aircraft, the aircraft can be controlled to release the load. Additionally, to facilitate the user in locating the released load later, the aircraft can record its position information (e.g., GPS location) at the time of release. Furthermore, the aircraft can circle around the load to capture images of the surrounding area, making it easier for the user to locate the load based on these images later.

During the process of transporting a load using an aircraft, since the load is suspended below the aircraft via a cable, large maneuvering behaviors such as obstacle-avoidance braking or sudden environmental wind changes during flight may cause the cable to swing. If the swing amplitude is too large, it may result in the cable wrapping around the aircraft's body or propeller blades, leading to power failure, aircraft crash, and even posing risks to pedestrians or buildings on the ground. This indicates that excessive cable swing amplitude during flight can easily lead to significant safety hazards.

To prevent the load's swing angle from becoming too large, two measures can be adopted during the aircraft's flight: one is to minimize occurrences of excessive swing angles during flight, and the other is to perform swing suppression operations to eliminate the swing angle if an excessive swing angle occurs.

Based on the approach to avoid excessive swing angles of the load, in some embodiments, the swing angle can be prevented from becoming too large by reducing the upper limit of the aircraft's motion state parameters during flight. For example, upon detecting that the aircraft is equipped with a hoist system, the aircraft can be controlled to switch from non-hoist mode to hoist mode, where the upper limit of the aircraft's motion state parameters in hoist mode is lower than that in non-hoist mode. The motion state parameters may include the aircraft's horizontal speed, vertical speed, angular velocity, acceleration, attitude angle, angular velocity loop gain, attitude loop gain, etc. In scenarios where the aircraft is not carrying a load, it can operate with higher motion state parameters. However, when the aircraft is carrying a load, if it moves with high motion state parameters, such as suddenly accelerating with large acceleration or moving at high speed, it is likely to cause excessive load swing angles. Therefore, to ensure smoother flight and avoid significant load swinging, when it is detected that the aircraft is carrying a load, the aircraft can be controlled to enter hoist mode, where the upper limit of the motion state parameters is set lower than when no load is carried.

In some embodiments, when it is detected that the load's swing angle is too large, swing suppression operations can be performed to eliminate the swing angle. For example, during the aircraft's flight, the state information of the load mounted on the aircraft can be obtained in real time, where this state information is related to the load's motion relative to the aircraft. Then, based on the load's state information, the aircraft's motion can be controlled to ensure that the load's state information meets preset conditions. The aircraft's state information can be obtained in real time, and based on this information, the relative positional relationship between the load and the aircraft can be determined to assess whether the load's swing angle is too large. Subsequently, the aircraft's motion can be controlled based on the state information to ensure that the load's state information satisfies the preset conditions. When the load's state information meets the preset conditions, it can be ensured that the load's swing angle is controlled within a preset angle range and does not become excessive.

In some embodiments, the state information of the load includes at least one of the following: the load's position, the load's swing direction, the load's swing angle, and the load's swing speed.

In some embodiments, the load's swing speed includes at least one of the following: the load's swing angular velocity and the load's swing linear velocity.

In some embodiments, as shown in FIG. 4, the load's position can be determined based on the relative positional relationship between the aircraft and the load in images collected by the visual sensor, as well as the aircraft's position information. Typically, aircraft are equipped with positioning sensors, such as GPS sensors, so the aircraft's position information can be determined based on data collected by the GPS sensor. Then, images collected by the visual sensor can be obtained, and the positions of the aircraft (possibly a part of the aircraft's body) and the load in the images can be identified. Based on their relative positional relationship in the images, their relative positional relationship in three-dimensional space can be determined. Consequently, the load's position information can be determined based on the aircraft's position information and the relative positional relationship.

In some embodiments, as shown in FIG. 5, the load's position can be determined based on the load's swing angle, the cable length between the aircraft and the load, and the aircraft's position information. Typically, aircraft are equipped with positioning sensors, such as GPS sensors, so the aircraft's position information can be determined based on data collected by the GPS sensor. The cable length between the aircraft and the load can also be determined; for example, if the cable length is fixed, it is a preset fixed value, or if the cable is retractable, the current extended length of the cable can be determined based on the hoist system. The load's swing angle can be determined based on the direction of the cable's force sensed by the tension sensor. After determining the swing angle, cable length, and aircraft's position information, the load's position information can be determined based on the aforementioned information.

In some embodiments, when controlling the aircraft's motion based on the load's state information, the aircraft can be controlled to move until the aircraft and the load remain relatively stationary. That is, when the aircraft and the load are relatively stationary, the load will not move relative to the aircraft, meaning the swing angle will not continue to increase.

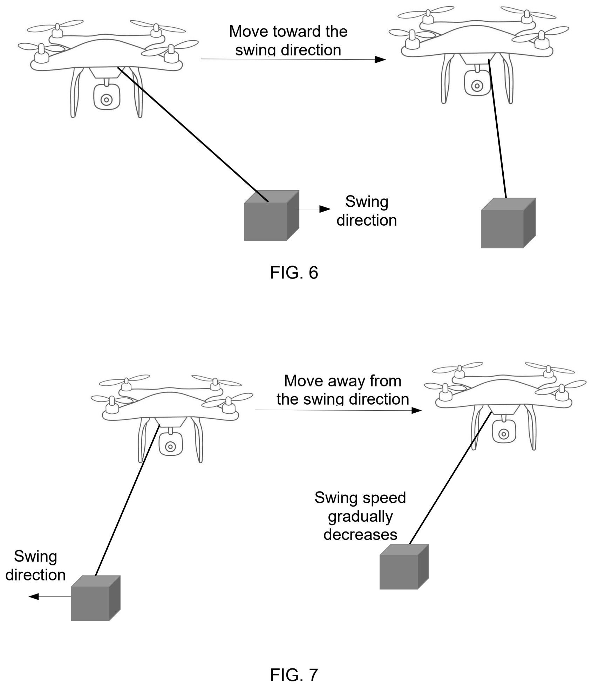

In some embodiments, as shown in FIG. 6, when controlling the aircraft's motion based on the load's state information, the aircraft's motion direction can be controlled to be substantially aligned with the load's swing direction, where the aircraft's motion speed is positively correlated with the load's swing angle. Specifically, the aircraft is made to move in the direction of the load's swing, causing the aircraft and the load to gradually approach each other, thereby reducing the horizontal distance between them, which in turn gradually reduces the swing angle. The aircraft's motion speed can be set based on the swing angle, with a larger swing angle corresponding to a higher aircraft motion speed. For example, as the aircraft gradually approaches the load, the swing angle decreases, and the aircraft's motion speed also gradually decreases until the aircraft and the load remain relatively stationary, completing the swing suppression operation.

In some embodiments, as shown in FIG. 7, when controlling the aircraft's motion based on the load's state information, the aircraft's motion direction can be controlled to be opposite to the load's swing direction, where the aircraft's motion speed is positively correlated with the load's swing speed. The aircraft can be controlled to move in the direction opposite to the load's swing direction, thereby providing a tension force opposite to the swing speed to reduce the swing speed until it reaches zero, thus completing the swing suppression. The swing speed can be either the swing linear velocity or the swing angular velocity. For example, the aircraft can be controlled to fly in the direction opposite to the swing linear velocity, thereby providing a tension force in the opposite direction of the swing linear velocity until the swing linear velocity drops to zero.

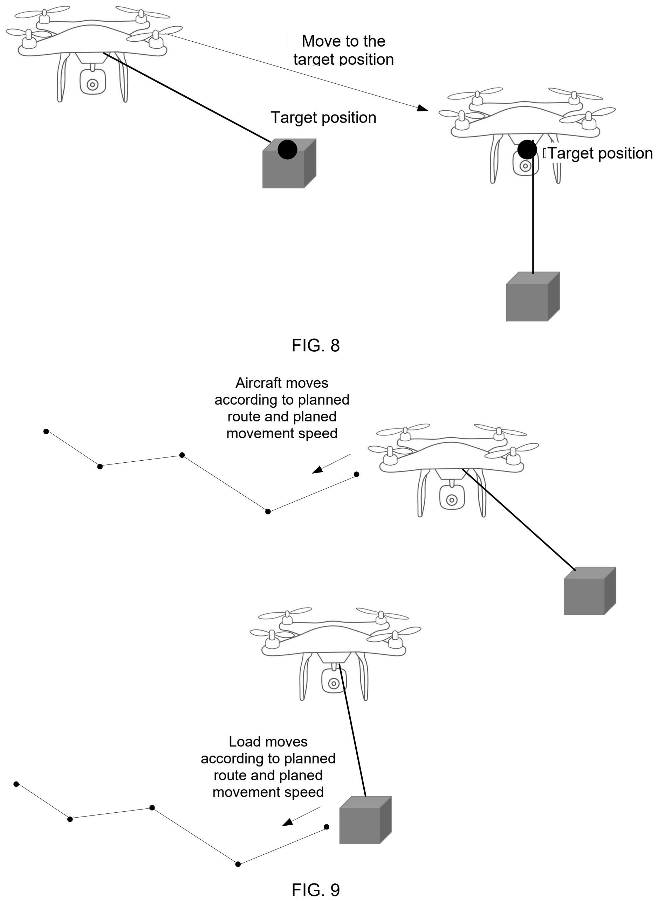

In some embodiments, as shown in FIG. 8, when controlling the motion of the aircraft based on the state information of the load, the target position where the swing speed is zero during the load swing process can be determined first, and then the aircraft can be controlled to move to the target position. In some embodiments, the target position is the position with the highest altitude and zero swing speed during the load swing process.

For example, during the swing process, the load is essentially undergoing simple pendulum motion. In the simple pendulum motion, when the load swings to the highest point (where the speed is 0), it will fall back, and at this time, the swing angle is also the largest. To avoid an excessively large swing angle, the target position where the load is at the highest point and the swing speed is 0 can be predicted based on the current motion speed of the load, the cable length, etc., and then the aircraft can be directly controlled to fly to the target position, thereby completing swing suppression and avoiding an excessively large swing angle of the load.

Typically, during the flight process, the aircraft is taken as the controlled object, as shown in FIG. 9. For example, the aircraft is controlled to fly according to a preset route and a preset moving speed. However, when the aircraft flies according to the preset route and preset moving speed, the load will swing relative to the aircraft, leading to the issue of an excessively large swing angle. In some embodiments, to achieve swing suppression and avoid an excessively large swing angle of the load, the controlled object can be changed to the load. That is, during the flight process, by controlling the aircraft's motion to drive the load's motion, the load can move according to the preset route and preset moving speed. For instance, while the aircraft is flying along the planned route, the target moving direction of the load can be determined based on the deviation between the load and the planned route, and the target moving speed of the load can be determined based on the deviation between the load's moving speed and the planned moving speed. Then, the aircraft's motion is controlled to make the load move according to the target moving direction and the target moving speed. In this application, the moving speed refers to the speed of the aircraft or the load relative to the ground, while the swing speed refers to the speed of the load swinging relative to the aircraft. By changing the controlled object to the load, the load can be directly controlled to move along the planned route and planned moving speed, while the aircraft is used to provide power, enabling the load to move in the predetermined manner. This can prevent the load from swinging relative to the aircraft, thus avoiding the issue of an excessively large swing angle.

In some embodiments, considering that the issue of an excessively large load swing angle only occurs when the aircraft undergoes emergency braking, acceleration, or a sudden increase in environmental wind, and that swing suppression operations may to some extent affect the aircraft's ability to fly along the planned route, thus impacting transportation efficiency, swing suppression is not required throughout the entire flight process. Instead, swing suppression operations are performed only when the aircraft is determined to be in swing suppression mode. Therefore, the operation of controlling the aircraft's motion based on the load's state information to achieve swing suppression, as described above, is executed only after receiving a command to enter swing suppression mode.

The aircraft can automatically enter swing suppression mode or enter swing suppression mode after receiving a user command. For example, in some embodiments, the aircraft can be controlled to automatically enter swing suppression mode when the load's swing angle is detected to be greater than a preset angle. For instance, the load's swing angle can be monitored in real-time during flight, and when the swing angle exceeds the preset angle, it is considered that the swing angle is too large, requiring swing suppression operations. Consequently, the aircraft can enter swing suppression mode.

In some embodiments, the aircraft can be controlled to enter swing suppression mode after receiving a user-triggered command to enter swing suppression mode. For example, during the flight of the aircraft, the swing angle of the load can be sent to the aircraft's control device. When the user notices that the swing angle is too large, they can send a command to enter swing suppression mode through the control device. Alternatively, the control device can send a prompt to the user after detecting that the swing angle exceeds a preset angle, and upon receiving the user's command to enter swing suppression mode sent through the control device, the aircraft can be controlled to enter swing suppression mode.

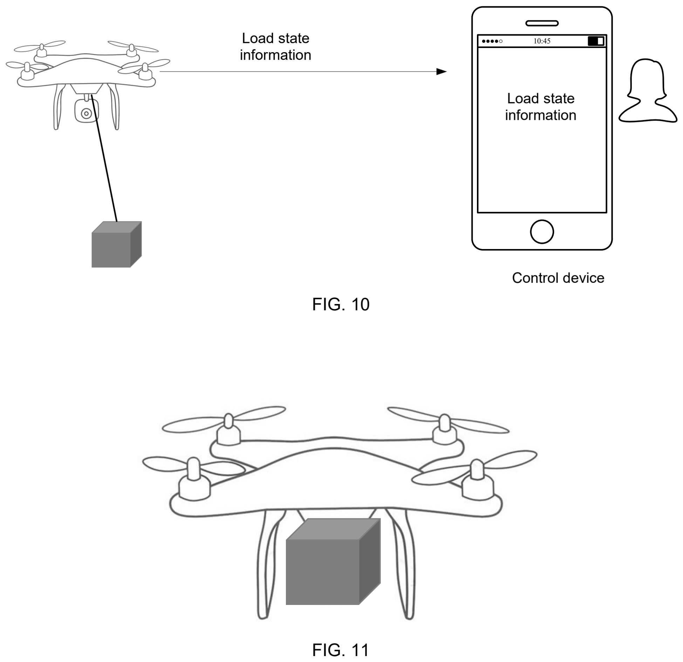

In some embodiments, as shown in FIG. 10, to facilitate users in remotely understanding the load's condition in real time, the load's state information can also be sent to the aircraft's control device, so that the control device can display the load's state information to the user in real time. For example, the load's state information may include one or more of the load's swing angle, cable length, load's swing speed, cable tension, load weight, and load position.

The load's swing angle is the angle between the cable and the direction of the load's gravity, which can be calculated by reading the force sensor data of the hoist system and determining the swing angle of the hoist system's cable based on the direction of the tension on the cable. Alternatively, the relative position of the suspended load and the aircraft can be identified through perception sensors (such as millimeter-wave radar, LiDAR, or visual sensors), thereby obtaining the load's swing angle.

The cable length can be determined based on the number of cable release turns recorded by the actuator of the hoist system. Alternatively, the relative position of the suspended load and the aircraft can be identified through perception sensors, and the distance between them can be calculated to obtain the cable length. Additionally, the cable length can also be calculated based on the swing frequency of the load.

The load's swing speed includes the swing angular velocity and swing linear velocity. The swing angular velocity of the load can be calculated by differentiating the load's swing angle, and the swing linear velocity of the load can then be determined by combining the swing angular velocity and the cable length. Alternatively, the relative position of the suspended load and the aircraft can be identified through perception sensors, and the swing linear velocity of the load can be calculated by differentiating the load's position.

The magnitude of the cable tension can be calculated by reading the force sensor of the hoist system. The weight of the load can be obtained by weighing with a standard scale before takeoff and inputting through an APP; it can also be calculated from the tension on the cable when the aircraft is hovering and the load is not swinging; alternatively, it can be determined by subtracting the centripetal force, calculated from the load's swing speed, from the tension on the cable to obtain the gravitational force on the load, thereby calculating the load's weight.

After the aircraft transports the load to the destination, the aircraft can land and release the load. In related technologies, the aircraft is typically controlled to land at the landing point before unloading the load. However, during the landing process, since there is no tension on the cable after the load touches the ground, the load is easily affected by rotor wash and environmental wind, causing it to swing. In cases of significant swinging, it may entangle the aircraft's fuselage and blades, leading to serious accidents such as crashes.

To avoid the aforementioned issues, in some embodiments, during the aircraft's landing process, if it is determined that the load has landed on the bearing surface, the aircraft can be controlled to release the load first. After the aircraft releases the load, the cable will also descend to the bearing surface, thereby avoiding the issue of the load swinging due to the lack of tension on the cable after touching the ground, which makes it susceptible to rotor wash and environmental wind, potentially entangling the aircraft's fuselage and blades during significant swinging. After releasing the load, the aircraft can be controlled to hover, and then a prompt message can be sent to the user, informing them that the load has been released onto the bearing surface.

In some embodiments, during the aircraft's hovering process, the aircraft can be controlled to perform corresponding tasks based on user instructions received within a preset time period. For example, while hovering, the user can control the aircraft to land, or the user can also control the aircraft to fly to other locations to perform other tasks.

In some embodiments, the aircraft can be controlled to land at a landing point specified by the user based on user instructions. For example, the user can designate a suitable landing point near the aircraft for the aircraft to land at. For instance, the user can point to a specific location on the ground, or the user can tap the ground with the foot, and the aircraft can recognize the user-indicated position through images collected by visual sensors and land at that position.

In some embodiments, during the hovering process, if no user instructions are received within a preset time period, the aircraft can determine a landing point within a preset distance range from the load based on environmental data collected by the aircraft, and control the aircraft to land at that landing point. If no user instructions are received within a certain period, the aircraft can automatically search for a suitable landing point in the surrounding area and land. This landing point can be a relatively flat location suitable for the aircraft to land.

In some embodiments, during the hovering process, if no user instructions are received within a preset time period and it is determined, based on environmental data collected by the aircraft's perception sensors, that there is no suitable landing point within the preset distance range of the load, the aircraft can be controlled to remain in a hovering state. During hovering, a prompt message can be sent to the user to facilitate the user's decision on how to control the aircraft.

In related technologies, when the aircraft lands, it is landed above the load. However, some bearing surfaces may be uneven, which can easily cause the load to be uneven after touching the ground. If the aircraft lands above the load, it may cause the aircraft to tip over, resulting in unpredictable damage to both the aircraft and the load. To avoid the aforementioned issues, in some embodiments, during the aircraft's landing process, if it is determined that the load has landed on the bearing surface, it can be judged whether the load's volume is smaller than the space formed by the aircraft's landing gear, and the aircraft's landing position can be determined based on this judgment result.

In some embodiments, if the load's volume is smaller than the space formed by the aircraft's landing gear, the position of the load is determined as the aircraft's landing point, and the aircraft is controlled to land at this landing point, where, when the aircraft is at this landing point, the load is located within the space formed by the aircraft's landing gear. As shown in FIG. 11, if the load's volume is smaller than the space formed by the aircraft's landing gear, the aircraft's position can be adjusted to accommodate the load within the space formed by the landing gear, and then the aircraft can be controlled to land.

In some embodiments, if the load's volume is greater than or equal to the space formed by the aircraft's landing gear, a landing point suitable for landing within a preset distance range from the load is determined based on environmental data collected by the aircraft, and the aircraft is controlled to land at this landing point. For example, the aircraft can be automatically controlled to search for a suitable landing point in the surrounding area and land. This landing point can be a relatively flat location suitable for the aircraft to land.

In addition, during the process of transporting a load, the aircraft is prone to being pulled, causing it to tilt. If the tilt angle becomes too large, it can easily lead to the aircraft rolling over, resulting in a crash. For example, during takeoff, the mounted load may exceed the weight limit, and the aircraft may fail to lift the load, causing the aircraft to be pulled and tilted. Alternatively, when the aircraft reaches its destination and the user unloads the load, the load's excessive weight or pulling by ground personnel may cause the aircraft to be pulled and tilted. Furthermore, during flight, if the load gets caught on tall trees, high-voltage towers, or other objects, the aircraft may be unable to follow the predetermined trajectory, causing it to be pulled and tilted. To avoid these issues, during the aircraft's flight, if the tension of the cable carrying the load is detected to be greater than a preset tension threshold, the aircraft can be controlled to move in the direction that releases the cable tension until the cable tension is less than the preset tension threshold. For instance, if the cable tension is detected to exceed the preset tension threshold, it indicates that the aircraft is being pulled and may be at risk of rolling over. At this point, the aircraft can be controlled to move in the direction that releases the tension until the cable tension falls below the preset tension threshold. Then, the aircraft can be controlled to enter a hovering state, and an alert prompt can be sent to the user.

In some embodiments, during the flight of the aircraft, if it is detected that the tension of the cable mounted with the load is greater than a preset tension threshold, then commands to increase the power output of the aircraft are not responded to. If at this time the cable tension exceeds the preset tension threshold, it indicates that there is a risk of the aircraft tipping over. In this case, any command that would increase the power output of the aircraft will not be responded to. For example, if controlling the aircraft to fly along a predetermined trajectory would increase the power output, then the command to control the aircraft to fly along the predetermined trajectory will not be executed.

In addition, since the aircraft is carrying a load, during obstacle avoidance, the aircraft needs to consider not only the distance between itself and the obstacle but also the distance between the cable, the suspended load, and the obstacle, in order to avoid collisions between the load or the cable and the obstacle. Therefore, in some embodiments, during the flight of the aircraft, the swinging angle of the load during obstacle avoidance can be determined, and based on this swinging angle, the obstacle avoidance distance of the aircraft can be determined, so that during the obstacle avoidance process according to this distance, the load does not collide with the obstacle. For example, the aircraft can dynamically adjust the obstacle avoidance distance based on the estimated swinging angle of the load during obstacle avoidance, to ensure that the load does not hit the obstacle. The distance between the load and the obstacle can be obtained through perception sensors, including but not limited to millimeter-wave radar, vision sensors, LiDAR, etc., or by calculating the position of the load through a force sensor.

In some embodiments, considering that during the rapid deceleration of the aircraft, there is a tendency for the load to swing excessively, in some embodiments, during the deceleration of the aircraft, the deceleration magnitude of the aircraft can be determined based on the swinging angle of the load, where the deceleration magnitude is negatively correlated with the swinging angle. During the deceleration process, the deceleration magnitude of the aircraft can be dynamically adjusted in real time based on the swinging angle of the load, which can prevent excessive swinging that may cause the cable to entangle with the aircraft body or rotor blades. In addition, the deceleration distance can also be adjusted based on the position and swinging angle of the load.

Moreover, some embodiments of the present application also provide a control method for an aircraft, the method including:
During a landing process of the aircraft, if a load carried on the aircraft has landed on a bearing surface, controlling the aircraft to release the load;
After releasing the load, controlling the aircraft to hover, and during the hovering process of the aircraft, determining whether a user command is received within a preset duration, and if a user command is received, performing a corresponding task based on the received user command.

In some embodiments, the determining of the corresponding task to be performed by the aircraft based on the user command received within the preset duration includes:
Controlling the aircraft to land at a landing point indicated by the user based on the user command.

In some embodiments, the method further includes:
During the hovering process of the aircraft, if no user command is received within the preset duration, determining a landing point within a preset distance range from the load based on the environmental data collected by the aircraft, and controlling the aircraft to land at the landing point.

In some embodiments, the method further includes:
During the hovering process of the aircraft, if no user instructions are received within a preset duration, and it is determined based on environmental data collected by the perception sensors on the aircraft that there is no landable landing point within the preset distance range of the load, then the aircraft is controlled to remain in a hovering state.

The specific details for implementing the above method can refer to the description in the above method embodiments, and will not be repeated herein.

In addition, the embodiments of the present application also provide a control method for an aircraft, the method including:
During the landing process of the aircraft, if it is determined that the load mounted on the aircraft has landed on the bearing surface;
Determine whether the volume of the load is smaller than the space formed by the aircraft's landing gear;
Determine the landing position of the aircraft based on a determination result.

In some embodiments, the method includes:
In response to the volume of the load being smaller than the space formed by the aircraft's landing gear, determining the position of the load as the landing point of the aircraft;
Controlling the aircraft to land at the landing point, where when the aircraft is at the landing point, the load is located within the space formed by the aircraft's landing gear.

In some embodiments, the method includes:
In response to the volume of the load being greater than or equal to the space formed by the aircraft's landing gear, determining a landing point within a preset distance range from the load based on environmental data collected by the aircraft, and controlling the aircraft to land at the landing point.

The specific details for implementing the above method can refer to the description in the above method embodiments, and will not be repeated herein.

In addition, the embodiments of the present application also provide a control method for an aircraft, the method including:
During the flight of the aircraft, obtaining in real-time the state information of the load mounted on the aircraft, the state information being related to the motion of the load relative to the aircraft;
Controlling the motion of the aircraft based on the state information of the load to make the state information of the load satisfy preset conditions.

In some embodiments, the state information of the load includes at least one of the following: load position, swing direction, swing angle, and swing speed.

In some embodiments, the load position is determined based on the following methods:
Based on the relative positional relationship between the aircraft and the load in images collected by a visual sensor, as well as the position information of the aircraft; or
Based on the swing angle of the load, the length of the cable connecting the aircraft and the load, and the position information of the aircraft.

In some embodiments, the swing speed includes at least one of the following: swing angular velocity and swing linear velocity.

In some embodiments, controlling the motion of the aircraft based on the state information of the load includes:
Controlling the motion of the aircraft until the aircraft and the load remain relatively stationary.

In some embodiments, controlling the motion of the aircraft based on the state information of the load includes:
Controlling the motion direction of the aircraft to be substantially consistent with the swing direction of the load, where the motion speed of the aircraft is positively correlated with the swing angle of the load.

In some embodiments, controlling the motion of the aircraft based on the state information of the load includes:
Controlling the motion direction of the aircraft to be opposite to the swing direction of the load, where the motion speed of the aircraft is positively correlated with the swing speed of the load.

In some embodiments, the controlling of the motion of the aircraft based on the state information of the load includes:
Determining a target position where the swing speed of the load is zero during its swing process;
Controlling the aircraft to move to the target position.

In some embodiments, the target position is the position where the load reaches the highest height and the swing speed is zero during its swing process.

In some embodiments, controlling the motion of the aircraft based on the state information of the load includes:
During the flight of the aircraft along a planned route, determining a target movement direction of the load based on the deviation between the load and the planned route, determining a target movement speed of the load based on the deviation between the load's movement speed and the planned movement speed, and controlling the aircraft's motion to make the load move according to the target movement direction and the target movement speed.

In some embodiments, before controlling the motion of the aircraft based on the state information of the load, the method further includes:
Receiving an instruction to enter a swing suppression mode.

In some embodiments, the aircraft automatically enters swing suppression mode after detecting that the load swing angle is greater than a preset angle; or
After receiving a user-triggered instruction to enter swing suppression mode, controlling the aircraft to enter swing suppression mode.

In some embodiments, the method further includes:
Sending the state information of the load to the control device of the aircraft, so that the control device displays the load state information to the user in real-time.

In some embodiments, the method further includes:
After detecting that the aircraft is equipped with an empty sling system, controlling the aircraft to switch from non-sling mode to sling mode, where the upper limit of the aircraft's motion state parameters in the sling mode is less than the upper limit of the aircraft's motion state parameters in the non-sling mode.

The specific details for implementing the above method can refer to the description in the above method embodiments, and will not be repeated herein.

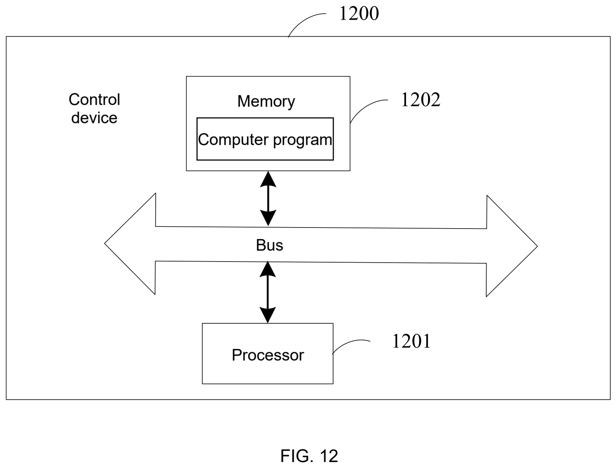

In addition, the embodiments of the present application provide an image processing apparatus, as shown in FIG. 12, the apparatus 1200 includes a processor 1201, a memory 1202, and a computer program stored in the memory executable by the processor 1201. When the processor 1201 executes the computer program, the following steps can be implemented:
Determine the position information of the aircraft and the position information of the load, where the load is located on a bearing surface;
Based on the position information of the aircraft and the position information of the load, determine whether the horizontal position of the aircraft satisfies a first preset condition;
In response to the horizontal position of the aircraft not satisfying the first preset condition, prohibit the aircraft from pulling the load away from the bearing surface.

In some embodiments, the processor is further configured to, during the process of prohibiting the aircraft from pulling the load away from the bearing surface, control the aircraft to adjust its horizontal position to satisfy the first preset condition.

In some embodiments, the processor is further configured to, during the process of the aircraft adjusting its horizontal position to satisfy the first preset condition, control the height of the aircraft relative to the bearing surface to satisfy a second preset condition.

In some embodiments, the length of the pull-out cable of the aircraft is L, the angle of the cable relative to the horizontal plane is A, where the angle is less than or equal to 90°, and during the adjustment process, the height of the aircraft relative to the bearing surface is H, and the second preset condition is that H is less than or equal to L*sin A.

In some embodiments, the processor is further configured to, in response to the horizontal position of the aircraft satisfying the first preset condition, control the aircraft to move upward to pull the load away from the bearing surface.

In some embodiments, the first preset condition includes the aircraft being located directly above the load.

In some embodiments, when the processor is configured to control the aircraft to move upward to pull the load away from the bearing surface, it is specifically configured to:
Control the aircraft to move upward in a speed-limited mode to pull the load away from the bearing surface;
Upon detecting that the load has been pulled away from the bearing surface, control the aircraft to exit the speed-limited mode.

In some embodiments, the processor is further configured to: upon detecting that the load has been pulled away from the bearing surface and detecting that the aircraft or the load is in a trapped state, control the aircraft to maintain the speed-limited mode.

In some embodiments, when the processor is configured to detect that the aircraft or the load is in a trapped state, it is specifically configured to:
Determine that the aircraft or the load is in a trapped state if the duration for which the tension of the cable mounting the load exceeds a preset tension threshold exceeds a preset duration; and/or
Determine that the aircraft or the load is in a trapped state based on images collected by the aircraft's visual sensor.

In some embodiments, the processor is further configured to:
Display prompt information to the user through the control device of the aircraft, the prompt information being used to notify the user that the aircraft or the load is in a trapped state.

In some embodiments, the processor is further configured to: upon receiving an instruction triggered by the user to release the load, control the aircraft to release the load.

In some embodiments, the processor is further configured to:
During the flight of the aircraft, obtain in real-time the state information of the load mounted on the aircraft, the state information being related to the motion of the load relative to the aircraft;
Control the motion of the aircraft based on the state information of the load to make the state information of the load satisfy preset conditions.

In some embodiments, the state information of the load includes at least one of the following: load position, swing direction, swing angle, and swing speed.

In some embodiments, the load position is determined based on the following methods:
Determined according to the relative positional relationship between the aircraft and the load in the images collected by the visual sensor, and the position information of the aircraft; or
Determined according to the swing angle of the load, the length of the cable mounted between the aircraft and the load, and the position information of the aircraft.

In some embodiments, the swing speed includes at least one of the following: swing angular velocity and swing linear velocity.

In some embodiments, when the processor is configured to control the motion of the aircraft based on the state information of the load, it is specifically configured to:
Control the motion of the aircraft until the aircraft remains relatively stationary with respect to the load.

In some embodiments, when the processor controls the motion of the aircraft based on the state information of the load, it is specifically configured to:
Control the motion direction of the aircraft to be substantially consistent with the swing direction of the load, where the motion speed of the aircraft is positively correlated with the swing angle of the load.

In some embodiments, when the processor is configured to control the motion of the aircraft based on the state information of the load, it is specifically configured to:
Control the motion direction of the aircraft to be opposite to the swing direction of the load, where the motion speed of the aircraft is positively correlated with the swing speed of the load.

In some embodiments, when the processor is configured to control the motion of the aircraft based on the state information of the load, it is specifically configured to:
Determine a target position where the swing speed of the load is zero during the swing process;
Control the aircraft to move to the target position.

In some embodiments, the target position is the position where the load reaches the highest height and the swing speed is zero during the swing process.

In some embodiments, when the processor is configured to control the motion of the aircraft based on the state information of the load, it is specifically configured to:
During the process of the aircraft flying along a planned route, determine the target movement direction of the load based on the deviation between the load and the planned route, determine the target movement speed of the load based on the deviation between the movement speed of the load and the planned movement speed, and control the aircraft's motion to make the load move according to the target movement direction and the target movement speed.

In some embodiments, before controlling the motion of the aircraft based on the state information of the load, the processor is further configured to:
Receive an instruction to enter swing suppression mode.

In some embodiments, the aircraft automatically enters swing suppression mode after detecting that the load swing angle is greater than a preset angle; or
After receiving an instruction triggered by the user to enter swing suppression mode, control the aircraft to enter swing suppression mode.

In some embodiments, the processor is further configured to:
Send the state information of the load to the control device of the aircraft, so that the control device displays the load state information to the user in real time.

In some embodiments, the processor is further configured to:
After detecting that the aircraft is equipped with an empty hoist system, control the aircraft to switch from non-hoist mode to hoist mode, where the upper limit of the motion state parameters of the aircraft in the hoist mode is less than the upper limit of the motion state parameters of the aircraft in the non-hoist mode.

In some embodiments, the processor is further configured to:
During the landing process of the aircraft, if it is determined that the load has landed on the bearing surface, control the aircraft to release the load;

After releasing the load, control the aircraft to hover and send a prompt message to the user.

In some embodiments, the processor is further configured to:
During the hovering process of the aircraft, based on user instructions received within a preset duration, control the aircraft to perform corresponding tasks.

In some embodiments, when the processor is configured to determine the corresponding tasks for the aircraft to perform based on user instructions received within a preset duration, it is specifically configured to:
Control the aircraft to land at a landing point indicated by the user based on the user instructions.

In some embodiments, the processor is further configured to:
During the hovering process of the aircraft, if no user instructions are received within the preset duration, determine a landing point within a preset distance range from the load based on environmental data collected by the aircraft, and control the aircraft to land at the landing point.

In some embodiments, the processor is further configured to:
During the hovering process of the aircraft, if no user instructions are received within a preset duration, and it is determined based on environmental data collected by the aircraft's perception sensors that no landing point is available within a preset distance range from the load, control the aircraft to remain in a hovering state.

In some embodiments, the processor is further configured to:
During the landing process of the aircraft, if it is determined that the load has landed on the bearing surface;
Determine whether the volume of the load is smaller than the space formed by the aircraft's landing gear;
Determine the landing position of the aircraft based on the result of the determination.

In some embodiments, the processor is further configured to:
In response to the volume of the load being smaller than the space formed by the aircraft's landing gear, determine the position of the load as the landing point of the aircraft;
Control the aircraft to land at the landing point, where when the aircraft is at the landing point, the load is located within the space formed by the aircraft's landing gear.

In some embodiments, the processor is further configured to:
In response to the volume of the load being greater than or equal to the space formed by the aircraft's landing gear, determine a landing point within a preset distance range from the load based on environmental data collected by the aircraft, and control the aircraft to land at the landing point.

In some embodiments, the processor is further configured to:
During the flight of the aircraft, if it is detected that the tension of the cable mounting the load is greater than a preset tension threshold, control the aircraft to move in the direction of releasing the cable tension until the cable tension is less than the preset tension threshold.

In some embodiments, the processor is further configured to:
During the flight of the aircraft, if it is detected that the tension of the cable mounting the load is greater than a preset tension threshold, not respond to instructions to increase the power output of the aircraft.

In some embodiments, the processor is further configured to:
During the flight of the aircraft, determine the swing angle of the load during the obstacle avoidance process of the aircraft;
Determine the obstacle avoidance distance of the aircraft based on the swing angle, so that the load does not collide with obstacles during the aircraft's obstacle avoidance process according to the obstacle avoidance distance.

In some embodiments, the processor is further configured to:
During the deceleration process of the aircraft, determine the deceleration magnitude of the aircraft based on the swing angle of the load, where the deceleration magnitude is negatively correlated with the swing angle.

In addition, the embodiments of the present application further provide a control device for an aircraft, the device including a processor, a memory, and a computer program stored in the memory executable by the processor. When the processor executes the computer program, the following steps can be implemented:
During the landing process of the aircraft, if the load mounted on the aircraft has landed on the bearing surface, control the aircraft to release the load;

After releasing the load, control the aircraft to hover, and during the hovering process of the aircraft, determine whether a user instruction is received within a preset duration, and if a user instruction is received, perform corresponding tasks based on the received user instruction.

In addition, some embodiments of the present application further provide a control device for an aircraft, the device including a processor, a memory, and a computer program stored in the memory executable by the processor. When the processor executes the computer program, the following steps can be implemented:
During the landing process of the aircraft, if it is determined that the load mounted on the aircraft has landed on the bearing surface;
Determine whether the volume of the load is smaller than the space formed by the aircraft's landing gear;
Determine the landing position of the aircraft based on the result of the determination.

Moreover, the embodiments of the present application further provide a control device for an aircraft, the device including a processor, a memory, and a computer program stored in the memory executable by the processor. When the processor executes the computer program, the following steps can be implemented:
During the flight of the aircraft, acquire in real time the state information of the load mounted on the aircraft, the state information being related to the motion of the load relative to the aircraft;
Control the motion of the aircraft based on the state information of the load, so that the state information of the load satisfies preset conditions.

The specific details of the control device implementing the control of the aircraft can refer to the description of the method embodiments above, and will not be repeated here.

It is not difficult to understand that the solutions described in the above embodiments can be combined in the absence of conflicts, and the embodiments of the present application do not enumerate them one by one.

Accordingly, the embodiments of the present application further provide a computer storage medium, where a program is stored in the storage medium, and when the program is executed by a processor, the method in any of the above embodiments is implemented.

Some embodiments of the present application may take the form of a computer program product implemented on one or more storage media containing program code (including but not limited to disk storage, CD-ROM, optical storage, etc.). Computer-usable storage media include permanent and non-permanent, removable and non-removable media, and information storage can be achieved by any method or technology. The information may be computer-readable instructions, data structures, program modules, or other data. Examples of computer storage media include but are not limited to: phase-change memory (PRAM), static random access memory (SRAM), dynamic random access memory (DRAM), other types of random access memory (RAM), read-only memory (ROM), electrically erasable programmable read-only memory (EEPROM), flash memory or other memory technologies, compact disc read-only memory (CD-ROM), digital versatile disc (DVD) or other optical storage, magnetic cassette tape, magnetic tape disk storage or other magnetic storage devices, or any other non-transmission medium that can be used to store information accessible by a computing device.

For the device embodiments, since they basically correspond to the method embodiments, reference can be made to the relevant descriptions in the method embodiments for related details. The device embodiments described above are merely illustrative, where the units described as separate components may or may not be physically separate, and the components displayed as units may or may not be physical units, i.e., they may be located in one place or distributed across multiple network units. Some or all of the modules can be selected according to actual needs to achieve the purpose of the solution of this embodiment. A person of ordinary skill in the art can understand and implement it without creative effort.

It should be noted that, in this document, relational terms such as first and second are merely used to distinguish one entity or operation from another entity or operation, without necessarily requiring or implying any actual relationship or order between such entities or operations. The terms "comprising," "including," or any other variation thereof are intended to cover non-exclusive inclusion, such that a process, method, article, or apparatus that comprises a list of elements includes not only those elements but also other elements not expressly listed, or elements inherent to such process, method, article, or apparatus. Without further limitation, an element defined by the phrase "comprising a..." does not exclude the presence of additional identical elements in the process, method, article, or apparatus that comprises the element.

The above provides a detailed description of the methods and apparatuses offered by the embodiments of the present invention. Specific examples are used herein to illustrate the principles and embodiments of the present invention. The description of the above embodiments is only intended to help understand the method and core ideas of the present invention; meanwhile, for a person skilled in the art, based on the ideas of the present invention, there may be changes in the specific embodiments and scope of application. In summary, the content of this specification should not be construed as a limitation of the present invention.

## Claims

1. A control method for an aircraft, **characterized in that** the method comprises:
determining position information of the aircraft and position information of a load, wherein the load is located on a bearing surface;
based on the position information of the aircraft and the position information of the load, determining whether a horizontal position of the aircraft satisfies a first preset condition; and
in response to the horizontal position of the aircraft not satisfying the first preset condition, prohibiting the aircraft from pulling the load away from the bearing surface.

2. The method according to claim 1, **characterized in that**, during a process of prohibiting the aircraft from pulling the load away from the bearing surface, controlling the aircraft to adjust the horizontal position to satisfy the first preset condition.

3. The method according to claim 2, **characterized in that**, during a process of the aircraft adjusting the horizontal position to satisfy the first preset condition, controlling a height of the aircraft relative to the bearing surface to satisfy a second preset condition.

4. The method according to claim 3, **characterized in that** a length of a pull-out cable of the aircraft is L, an angle of the cable relative to a horizontal plane is A, the angle is less than or equal to 90°, and during the adjustment process, the height of the aircraft relative to the load is H, and the second preset condition is that H is less than or equal to L*sin A.

5. The method according to claim 1, **characterized in that**, in response to the horizontal position of the aircraft satisfying the first preset condition, controlling the aircraft to move upward to pull the load away from the bearing surface.

6. The method according to any one of claims 1-5, **characterized in that** the first preset condition comprises the aircraft being located directly above the load.

7. The method according to claim 1, **characterized in that** the controlling of the aircraft to move upward to pull the load away from the bearing surface comprises:
controlling the aircraft to move upward in a speed-limited mode to pull the load away from the bearing surface; and
in response to detecting that the load has been pulled away from the bearing surface, controlling the aircraft to exit the speed-limited mode.

8. The method according to claim 7, **characterized in that** the method further comprises: in response to detecting that the load has been pulled away from the bearing surface and detecting that the aircraft or the load is in a trapped state, controlling the aircraft to maintain the speed-limited mode.

9. The method according to claim 8, **characterized in that** the step of detecting that the aircraft or the load is in a trapped state comprises:
determining that the aircraft or the load is in a trapped state when a duration for which the tension of a cable carrying the load exceeds a preset tension threshold exceeds a preset duration; and/or
determining that the aircraft or the load is in a trapped state based on images collected by the aircraft's visual sensor.

10. The method according to claim 8, **characterized in that** the method further comprises:
displaying prompt information to a user through a control device of the aircraft, wherein the prompt information is configured to prompt the user that the aircraft or the load is in a trapped state.

11. The method according to claim 10, **characterized in that** the method further comprises: in response to receiving an instruction triggered by a user to release the load, controlling the aircraft to release the load.

12. The method according to claim 1, **characterized in that** the method further comprises:
during a flight of the aircraft, obtaining in real time state information of the load mounted on the aircraft, the state information being related to a movement of the load relative to the aircraft; and
controlling a movement of the aircraft based on the state information of the load, so that the state information of the load meets the preset condition.

13. The method according to claim 12, **characterized in that** the state information of the load comprises at least one of: load position, swing direction, swing angle, or swing speed.

14. The method according to claim 13, **characterized in that** the load position is determined based on:
determining based on a relative positional relationship between the aircraft and the load in images collected by a vision sensor, and the position information of the aircraft; or
determining based on a swing angle of the load, a length of a cable suspending between the aircraft and the load, and the position information of the aircraft.

15. The method according to claim 13, **characterized in that** the swing speed comprises at least one of: swing angular speed or swing linear speed.

16. The method according to claim 12, **characterized in that** the controlling of the movement of the aircraft based on the state information of the load comprises:
controlling the movement of the aircraft until the aircraft and the load remain relatively stationary.

17. The method according to claim 12, **characterized in that** the controlling of the movement of the aircraft based on the state information of the load comprises:
controlling a movement direction of the aircraft to be substantially consistent with the swing direction of the load, wherein a movement speed of the aircraft is positively correlated with a swing angle of the load.

18. The method according to claim 12, **characterized in that** the controlling of the movement of the aircraft based on the state information of the load comprises:
controlling a movement direction of the aircraft to be opposite to a swing direction of the load, wherein a movement speed of the aircraft is positively correlated with a swing speed of the load.

19. The method according to claim 12, **characterized in that** the controlling of the movement of the aircraft based on the state information of the load comprises:
determining a target position where a swing speed of the load is zero during a swinging process; and
controlling the aircraft to move to the target position.

20. The method according to claim 19, **characterized in that** the target position is a position where the load reaches a highest altitude with the swing speed of zero during the swinging process.

21. The method according to claim 12, **characterized in that** the controlling of the movement of the aircraft based on the state information of the load comprises:
during a flight of the aircraft along a planned route, determining a target movement direction of the load based on a deviation between the load and the planned route, determining a target movement speed of the load based on the deviation between a movement speed of the load and a planned movement speed, and controlling the aircraft to move so that the load moves based on the target movement direction and the target movement speed.

22. The method according to claim 12, **characterized in that** prior to controlling the movement of the aircraft based on the state information of the load, the method further comprises:
receiving an instruction to enter a swing suppression mode.

23. The method according to claim 22, **characterized in that** after detecting that a swing angle of the load is greater than a preset angle, the aircraft automatically enters the swing suppression mode; or
after receiving a user-triggered instruction to enter the swing suppression mode, the aircraft is controlled to enter the swing suppression mode.

24. The method according to claim 12, **characterized in that** the method further comprises:
sending the state information of the load to a control device of the aircraft, so that the control device displays the state information of the load to a user in real time.

25. The method according to claim 1, **characterized in that** the method further comprises:
after detecting that the aircraft is equipped with a sling system, controlling the aircraft to switch from a non-sling mode to a sling mode, wherein an upper limit of a motion state parameter of the aircraft in the sling mode is less than an upper limit of the motion state parameter of the aircraft in the non-sling mode.

26. The method according to claim 1, **characterized in that** the method further comprises:
during a landing process of the aircraft, in response to that the load has landed on the bearing surface, controlling the aircraft to release the load; and
after releasing the load, controlling the aircraft to hover and send a prompt message to a user.

27. The method according to claim 26, **characterized in that** the method further comprises:
during a hovering process of the aircraft, controlling the aircraft to perform a corresponding task based on a user instruction received within a preset duration.

28. The method according to claim 27, **characterized in that** the controlling of the aircraft to perform the corresponding task based on the user instruction received within the preset duration comprises:
controlling the aircraft to land at a landing point indicated by the user based on the user instruction.

29. The method according to claim 26, **characterized in that** the method further comprises:
during a hovering process of the aircraft, in response to that no user instruction is received within a preset duration, determining a landing point within a preset distance range from the load based on environmental data collected by the aircraft, and controlling the aircraft to land at the landing point.

30. The method according to claim 26, **characterized in that** the method further comprises:
during a hovering process of the aircraft, in response to receiving no user instruction within a preset duration and determining, based on environmental data collected by a perception sensor on the aircraft, that no landing point is available within a preset distance range from the load, controlling the aircraft to remain in the hovering state.

31. The method according to claim 1, **characterized in that** the method further comprises:
during a landing process of the aircraft, in response to determining that the load has landed on the bearing surface, determining whether a volume of the load is smaller than a space formed by an aircraft landing gear; and
determining a landing position of the aircraft based on a determination result.

32. The method according to claim 31, **characterized in that** the method comprises:
in response to the volume of the load being smaller than the space formed by the aircraft landing gear, determining a position where the load is located as the landing point of the aircraft; and
controlling the aircraft to land at the landing point, wherein, when the aircraft is at the landing point, the load is located within the space formed by the aircraft landing gear.

33. The method according to claim 31, **characterized in that** the method comprises:
in response to the volume of the load being greater than or equal to the space formed by the aircraft landing gear, determining a landing point within a preset distance range from the load based on environmental data collected by the aircraft, and controlling the aircraft to land at the landing point.

34. The method according to claim 1, **characterized in that** the method further comprises:
during a flight of the aircraft, in response to detecting that a cable tension of the load mounted exceeds a preset tension threshold, controlling the aircraft to move in a direction releasing the cable tension until the cable tension is less than the preset tension threshold.

35. The method according to claim 1, **characterized in that** the method further comprises:
during a flight of the aircraft, in response to detecting that a cable tension of the load mounted exceeds a preset tension threshold, not responding to an instruction to increase a power output of the aircraft.

36. The method according to claim 1, **characterized in that** the method further comprises:
during a flight of the aircraft, determining a swing angle of the load in an obstacle avoidance process of the aircraft; and
determining, based on the swing angle, an obstacle avoidance distance of the aircraft, so that the load does not collide with an obstacle during the obstacle avoidance process of the aircraft based on the obstacle avoidance distance.

37. The method according to claim 1, **characterized in that** the method further comprises:
during a deceleration process of the aircraft, determining a deceleration magnitude of the aircraft based on a swing angle of the load, wherein the deceleration magnitude is negatively correlated with the swing angle.

38. A control method for an aircraft, **characterized in that** the method comprises:
during a landing process of the aircraft, in response to that a load mounted on the aircraft has landed on a bearing surface, controlling the aircraft to release the load;
after releasing the load, controlling the aircraft to hover, and during a hovering process of the aircraft, determining whether a user instruction is received within a preset duration, and in response to receiving the user instruction, performing a corresponding task based on the user instruction received.

39. A control method for an aircraft, **characterized in that** the method comprises:
during a landing process of the aircraft, in response to determining that a load mounted on the aircraft has landed on the bearing surface, determining whether a volume of the load is less than a space formed by an aircraft landing gear; and
determining, based on a determination result, a landing position of the aircraft.

40. A control method for an aircraft, **characterized in that** the method comprises:
during a flight of the aircraft, obtaining state information of a load mounted on the aircraft in real time, the state information being related to a movement of the load relative to the aircraft; and
controlling the aircraft to move based on the state information of the load, so that the state information of the load meets a preset condition.

41. An image processing device, **characterized in that** the device comprises a processor, a memory, and a computer program stored in the memory and executable by the processor, wherein when executing the computer program, the processor is configured to implement the following steps:
determining position information of the aircraft and position information of a load, wherein the load is located on a bearing surface;
based on the position information of the aircraft and the position information of the load, determining whether a horizontal position of the aircraft satisfies a first preset condition; and
in response to the horizontal position of the aircraft not satisfying the first preset condition, prohibiting the aircraft from pulling the load away from the bearing surface.

42. The device according to claim 41, **characterized in that** the processor is further configured to, during a process of prohibiting the aircraft from pulling the load away from the bearing surface, control the aircraft to adjust the horizontal position to satisfy the first preset condition.

43. The device according to claim 42, **characterized in that** the processor is further configured to, during a process of the aircraft adjusting the horizontal position to satisfy the first preset condition, control a height of the aircraft relative to the bearing surface to satisfy a second preset condition.

44. The device according to claim 43, **characterized in that** a length of a pull-out cable of the aircraft is L, an angle of the cable relative to a horizontal plane is A, the angle is less than or equal to 90°, and during the adjustment process, the height of the aircraft relative to the load is H, and the second preset condition is that H is less than or equal to L*sin A.

45. The device according to claim 41, **characterized in that** the processor is further configured to, in response to the horizontal position of the aircraft satisfying the first preset condition, control the aircraft to move upward to pull the load away from the bearing surface.

46. The device according to any one of claims 41 to 45, **characterized in that** the first preset condition comprises the aircraft being located directly above the load.

47. The device according to claim 41, **characterized in that** when the processor is configured to control the aircraft to move upward to pull the load away from the bearing surface, the processor is specifically configured to:
control the aircraft to move upward in a speed-limited mode to pull the load away from the bearing surface; and
in response to detecting that the load has been pulled away from the bearing surface, control the aircraft to exit the speed-limited mode.

48. The device according to claim 47, **characterized in that** the processor is further configured to, in response to detecting that the load has been pulled away from the bearing surface and detecting that the aircraft or the load is in a trapped state, control the aircraft to maintain the speed-limited mode.

49. The device according to claim 48, **characterized in that** when the processor is configured to detecting that the aircraft or the load is in the trapped state, the processor is specifically configured to:
determine that the aircraft or the load is in a trapped state when a duration for which the tension of a cable carrying the load exceeds a preset tension threshold exceeds a preset duration; and/or
determine that the aircraft or the load is in a trapped state based on images collected by the aircraft's visual sensor.

50. The device according to claim 48, **characterized in that** the processor is further configured to,
display prompt information to a user through a control device of the aircraft, wherein the prompt information is configured to prompt the user that the aircraft or the load is in a trapped state.

51. The device according to claim 50, **characterized in that** the processor is further configured to, in response to receiving an instruction triggered by a user to release the load, control the aircraft to release the load.

52. The device according to claim 41, **characterized in that** the processor is further configured to,
during a flight of the aircraft, obtain in real time state information of the load mounted on the aircraft, wherein the state information is related to a movement of the load relative to the aircraft; and
control a movement of the aircraft based on the state information of the load, so that the state information of the load meets the preset condition.

53. The device according to claim 52, **characterized in that** the state information of the load comprises at least one of: load position, swing direction, swing angle, or swing speed.

54. The device according to claim 53, **characterized in that** the load position is determined based on:
determining based on a relative positional relationship between the aircraft and the load in images collected by a vision sensor, and the position information of the aircraft; or
determining based on a swing angle of the load, a length of a cable suspending between the aircraft and the load, and the position information of the aircraft.

55. The device according to claim 53, **characterized in that** the swing speed comprises at least one of: swing angular speed or swing linear speed.

56. The device according to claim 52, **characterized in that** when the processor is configured to control the movement of the aircraft based on the state information of the load, the processor is specifically configured to:
control the movement of the aircraft until the aircraft and the load remain relatively stationary.

57. The device according to claim 52, **characterized in that** when the processor is configured to control the movement of the aircraft based on the state information of the load, the processor is specifically configured to:
control a movement direction of the aircraft to be substantially consistent with the swing direction of the load, wherein a movement speed of the aircraft is positively correlated with a swing angle of the load.

58. The device according to claim 52, **characterized in that** when the processor is configured to control the movement of the aircraft based on the state information of the load, the processor is specifically configured to:
control a movement direction of the aircraft to be opposite to a swing direction of the load, wherein a movement speed of the aircraft is positively correlated with a swing speed of the load.

59. The device according to claim 52, **characterized in that** when the processor is configured to control the movement of the aircraft based on the state information of the load, the processor is specifically configured to:
determine a target position where a swing speed of the load is zero during a swinging process; and
control the aircraft to move to the target position.

60. The device according to claim 59, **characterized in that** the target position is a position where the load reaches a highest altitude with the swing speed of zero during the swinging process.

61. The device according to claim 52, **characterized in that** when the processor is configured to control the movement of the aircraft based on the state information of the load, the processor is specifically configured to:
during a flight of the aircraft along a planned route, determine a target movement direction of the load based on a deviation between the load and the planned route, determine a target movement speed of the load based on the deviation between a movement speed of the load and a planned movement speed, and control the aircraft to move so that the load moves based on the target movement direction and the target movement speed.

62. The device according to claim 52, **characterized in that** prior to controlling the movement of the aircraft based on the state information of the load, the processor is further configured to:
receive an instruction to enter a swing suppression mode.

63. The device according to claim 52, **characterized in that** after detecting that a swing angle of the load is greater than a preset angle, the aircraft automatically enters the swing suppression mode; or
after receiving a user-triggered instruction to enter the swing suppression mode, the aircraft is controlled to enter the swing suppression mode.

64. The device according to claim 52, **characterized in that** the processor is further configured to:
send the state information of the load to a control device of the aircraft, so that the control device displays the state information of the load to a user in real time.

65. The device according to claim 41, **characterized in that** the processor is further configured to:
after detecting that the aircraft is equipped with a sling system, control the aircraft to switch from a non-sling mode to a sling mode, wherein an upper limit of a motion state parameter of the aircraft in the sling mode is less than an upper limit of the motion state parameter of the aircraft in the non-sling mode.

66. The device according to claim 41, **characterized in that** the processor is further configured to:
during a landing process of the aircraft, in response to that the load has landed on the bearing surface, control the aircraft to release the load; and
after releasing the load, control the aircraft to hover and send a prompt message to a user.

67. The device according to claim 66, **characterized in that** the processor is further configured to:
during a hovering process of the aircraft, control the aircraft to perform a corresponding task based on a user instruction received within a preset duration.

68. The device according to claim 67, **characterized in that** when the processor is configured to determine that the aircraft performs a corresponding task based on the user instruction received within the preset duration, the processor is specifically configured to:
control the aircraft to land at a landing point indicated by the user based on the user instruction.

69. The device according to claim 66, **characterized in that** the processor is further configured to:
during a hovering process of the aircraft, in response to that no user instruction is received within a preset duration, determine a landing point within a preset distance range from the load based on environmental data collected by the aircraft, and control the aircraft to land at the landing point.

70. The device according to claim 66, **characterized in that** the processor is further configured to:
during a hovering process of the aircraft, in response to receiving no user instruction within a preset duration and determining, based on environmental data collected by a perception sensor on the aircraft, that no landing point is available within a preset distance range from the load, control the aircraft to remain in the hovering state.

71. The device according to claim 41, **characterized in that** the processor is further configured to:
during a landing process of the aircraft, in response to determining that the load has landed on the bearing surface, determine whether a volume of the load is smaller than a space formed by an aircraft landing gear; and
determine a landing position of the aircraft based on a determination result.

72. The device according to claim 71, **characterized in that** the processor is further configured to:
in response to the volume of the load being smaller than the space formed by the aircraft landing gear, determine a position where the load is located as the landing point of the aircraft; and
control the aircraft to land at the landing point, wherein, when the aircraft is at the landing point, the load is located within the space formed by the aircraft landing gear.

73. The device according to claim 71, **characterized in that** the processor is further configured to: in response to the volume of the load being greater than or equal to the space formed by the aircraft landing gear, determine a landing point within a preset distance range from the load based on environmental data collected by the aircraft, and control the aircraft to land at the landing point.

74. The device according to claim 41, **characterized in that** the processor is further configured to:
during a flight of the aircraft, in response to detecting that a cable tension of the load mounted exceeds a preset tension threshold, control the aircraft to move in a direction releasing the cable tension until the cable tension is less than the preset tension threshold.

75. The device according to claim 41, **characterized in that** the processor is further configured to:
during a flight of the aircraft, in response to detecting that a cable tension of the load mounted exceeds a preset tension threshold, not respond to an instruction to increase a power output of the aircraft.

76. The device according to claim 41, **characterized in that** the processor is further configured to:
during a flight of the aircraft, determine a swing angle of the load in an obstacle avoidance process of the aircraft; and
determine, based on the swing angle, an obstacle avoidance distance of the aircraft, so that the load does not collide with an obstacle during the obstacle avoidance process of the aircraft based on the obstacle avoidance distance.

77. The device according to claim 41, **characterized in that** the processor is further configured to:
during a deceleration process of the aircraft, determine a deceleration magnitude of the aircraft based on a swing angle of the load, wherein the deceleration magnitude is negatively correlated with the swing angle.

78. A control device for an aircraft, **characterized in that** the device comprises a processor, a memory, and a computer program stored in the memory and executable by the processor, wherein when executing the computer program, the processor is configured to implement the following steps:
during a landing process of the aircraft, in response to that a load mounted on the aircraft has landed on a bearing surface, controlling the aircraft to release the load;
after releasing the load, controlling the aircraft to hover, and during a hovering process of the aircraft, determining whether a user instruction is received within a preset duration, and in response to receiving the user instruction, performing a corresponding task based on the user instruction received.

79. A control device for an aircraft, **characterized in that** the device comprises a processor, a memory, and a computer program stored in the memory and executable by the processor, wherein when executing the computer program, the processor is configured to implement the following steps:
during a landing process of the aircraft, in response to determining that a load mounted on the aircraft has landed on the bearing surface, determining whether a volume of the load is less than a space formed by an aircraft landing gear; and
determining, based on a determination result, a landing position of the aircraft.

80. A control device for an aircraft, **characterized in that** the device comprises a processor, a memory, and a computer program stored in the memory and executable by the processor, wherein when executing the computer program, the processor is configured to implement the following steps:
during a flight of the aircraft, obtaining state information of a load mounted on the aircraft in real time, the state information being related to a movement of the load relative to the aircraft; and
controlling the aircraft to move based on the state information of the load, so that the state information of the load meets a preset condition.

81. An aircraft, **characterized in that** the aircraft comprises a processor, a memory, and a computer program stored in the memory and executable by the processor, wherein when executing the computer program, the processor is configured to implement the method according to any one of claims 1 to 40.

82. A computer-readable storage medium, **characterized in that** a computer program is stored on the computer-readable storage medium, which, when executed, implements the method according to any one of claims 1 to 40.
